(19) Europäisches Patentamt

European Patent Office

Office européen des brevets

(11) **EP 0 708 518 A1**

(12) **EUROPÄISCHE PATENTANMELDUNG**

(43) Veröffentlichungstag:
**24.04.1996 Patentblatt 1996/17**

(51) Int. Cl.$^6$: **H02J 13/00**, H04B 3/56

(21) Anmeldenummer: **95115791.6**

(22) Anmeldetag: **06.10.1995**

(84) Benannte Vertragsstaaten:
**AT BE CH DE DK ES FR GB GR IE IT LI LU MC NL PT SE**

(30) Priorität: **19.10.1994 DE 4437444**

(71) Anmelder: **SIEMENS AKTIENGESELLSCHAFT D-80333 München (DE)**

(72) Erfinder: **Krügel, Karl Heinz, Dipl.-Ing. D-91054 Buckenhof (DE)**

(54) **Ankoppelschaltung**

(57)     Um eine verbesserte Ankopplung eines Rundsteuersenders (3) an ein elektrisches Netz (5) zu erzielen, ist eine Ankoppelschaltung (1) vorgesehen, bei der ein Dreikreisfilter mit einem Transformator (T) verwendet wird. Der Transformator (T) ist als Dreiwickeltransformator ausgebildet, dessen Wicklungen (LN, LK, LS) lose miteinander gekoppelt sind.

FIG 1

EP 0 708 518 A1

**Beschreibung**

Die Erfindung bezieht sich auf eine Ankoppelschaltung zur Parallelankopplung eines Rundsteuersenders an ein mehrphasiges elektrisches Netz, die je anzukoppelnder Phase eine Reihenschaltung mit einem netzseitigen Ankoppelkondensator, einem nachfolgenden Transformator, der eine Netz- und eine Sendewicklung aufweist, und einem senderseitigen Abstimmkondensator umfaßt. Eine derartige Ankoppelschaltung ist aus dem Fachbuch "Fernwirktechnik, Überwachen und Steuern von Prozessen, VDI-Verlag, 1975, Seiten 134 bis 154 bekannt.

Mit Rundsteuersendeanlagen werden tonfrequente, codierte Impulsfolgen (Rundsteuersignale) zur Steuerung von Rundsteuerempfängern in geeignete Stellen der Energieversorgungsnetze eingespeist. Die Tonfrequenzimpulse werden dabei von einem Rundsteuersender dreiphasig erzeugt und über eine Ankoppeleinrichtung möglichst symmetrisch in die drei Phasen des Netzes eingespeist. Die Einspeisung dieser Impulsfolgen ist prinzipiell in allen Netzebenen, z.B. Mittel- oder Hochspannungsebene, mit Tonfrequenzen zwischen 100 Hz und 2 kHz möglich.

Grundsätzlich unterscheidet man 2 Arten der Einspeisung von Rundsteuersignalen in Energieversorgungsnetze: die Serien- und die Paralleleinspeisung (AEG Druckschrift "Rundsteuersystem Gearic", Veröffentlichungsnummer A 912.08 - 231 837.01 - 1287, Bild Seite 7). Im allgemeinen ist die Serieneinspeisung nur für Rundsteuerfrequenzen unterhalb 250 Hz geeignet, wahrend die Paralleleinspeisung für das gesamte Frequenzspektrum in Frage kommt.

Für Paralleleinspeisung geeignete Ankoppeleinrichtungen bestehen im wesentlichen aus einem Transformator zur Potentialtrennung zwischen dem Sender und dem Netz und aus Filterelementen zur signalmäßigen Trennung zwischen der Rundsteuerfrequenz und der Netzfrequenz einschließlich deren Harmonischen.

Solche Ankoppeleinrichtungen müssen geeignet sein, bei einer sich ständig ändernden Netzimpedanz (in Betrag und Winkel für die Rundsteuerfrequenz) Impulse mit einem möglichst konstanten Tonfrequenzpegel (Einspeisepegel) in das Netz zu übertragen.

In der einschlägigen Fachliteratur sind weitere an Parallelankoppeleinrichtungen gestellte Anforderungen ausführlich dargelegt. Im Vordergrund stehen hierbei die Gesichtspunkte des Netzbetriebes, die sich in Strom- und Spannungsbelastbarkeit der zum Anschluß an des Energieversorgungsnetz auszulegenden Geräte vorwiegend kostenbildend niederschlagen (s. VDE 0560, Teil 4 und 4A sowie VDE 0532, Teil 22). Demzufolge kommen für solche Ankoppelungen nach Stand der Technik von allen aus der Nachrichtentechnik bekannten Vierpolen nur die einfachsten Filter, namentlich der einfache Reihenschwingkreis oder zwei magnetisch miteinander gekoppelte Schwingkreise als Netzfilter in Betracht.

Die mit einem einfachen Reihenschwingkreis ausgestatteten Ankopplungen werden "starre Ankopplungen" genannt; die mit zwei gekoppelten Schwingkreisen bestückten Ankopplungen bezeichnet man als "Lose Ankopplungen". Beide Ankopplungsarten haben prinzipbedingte Vor- und Nachteile, die in der angeführten Literatur ausgiebig diskutiert werden.

Starre Ankopplungen sind aus der DE 2124869 A1, der DE 2124870 A und der DE 2461564 A1 bekannt. Sie zeichnen sich durch eine geringe Netzlastabhängigkeit des Einspeisepegels aus. Für eine zufriedenstellende Beherrschung der Netzrückwirkungen auf den Sender sind jedoch Zusatzeinrichtungen, z. B. ein Resonanzshunt, zwischen Sender und Ankopplung erforderlich.

Die Selektivität eines einkreisigen Filters ist naturgemäß recht niedrig. Um dennoch zu einer befriedigenden Flankensteilheit bei gleichzeitig geringem Abstimmwiderstand für die Tonfrequenz zu kommen, ist es erforderlich, die Güte der Ankoppelelemente möglichst hoch zu treiben. Eine sehr hohe Güte bedeutet aber auch eine sehr geringe Bandbreite und damit eine große Abstimmempfindlichkeit. Außerdem ergeben sich bei hoher Netzimpedanz (Schwachlast) und kurzen Rundsteuerimpulsen störende Verlängerungen der Ein- und Ausschwingzeiten. Der alternative Weg (Verzicht auf Flankensteilheit des Filters und normal hohe Güte) führt zu größeren und teureren Bauelementen. Der Platzbedarf ist bei einer starren Parallelankopplung ohnehin relativ groß.

Vorteilhaft ist jedoch das Verhalten der starren Ankopplung im passiven Betrieb: Wird die Senderseite während der Sendepausen kurzgeschlossen, so wirkt sie als Saugkreis für Tonfrequenz, so daß evtl. aus Nachbarnetzen übertretende Tonfrequenzsignale weitgehend abgesaugt werden. Leerlaufend stellt sich jedoch ein anderer (vorzugsweise unterhalb der Tonfrequenz liegender) Resonanzpunkt ein. Für Tonfrequenz hat die Ankopplung dann keine genau definierte Impedanz.

Lose Ankopplungen sind aus der DE 2459978 A1 und DE 2830151 A1 bekannt. Sie verhalten sich gegenüber Änderungen der Netzimpedanz kritischer als starre Ankopplungen, sind jedoch nur bedingt leerlauffest. Der Einspeisepegel bleibt auf Dauer nicht stabil. Sie beherrschen jedoch mühelos Netzrückwirkungen.

Durch die Bandfiltercharakteristik eines zweikreisigen Filters ergeben sich keine Engpässe bezüglich der Abstimmempfindlichkeit und der Ein- und Ausschwingzeiten. Nachteilig ist, daß der Resonanzpunkt vom Netz her gesehen sowohl im Leerlauf als auch bei kurzgeschlossenem Senderausgang mehr oder wenig von der Tonfrequenz abweicht, so daß sich während der Sendepausen keine nennenswerte Bedämpfung störender fremder Tonfrequenzsignale einstellt. Außerdem belastet eine lose Ankopplung in passiver Betriebsart ggf. eine auf das gleiche (vermaschte) Netz einspeisende Rundsteueranlage mit einer nicht genau definierten Impedanz.

Aus der DE 28 25 249 A1 ist eine Parallelankopplung für einen Rundsteuersender bekannt, bei der die Wicklungen des verwendeten Isoliertransformators wahlweise in Stern-Dreieck-Schaltung oder in Stern-Stern-Schaltung ausgeführt sind.

Die aufgeführten Lösungen nach dem Stand der Technik versuchen jeweils (und auch mit Erfolg) prinzipbedingte Nachteile der jeweils zugrundeliegenden Ankopplungsart (starr oder lose) durch Zusatzeinrichtungen, Verbesserung der Schaltungsanordnung oder besondere Auslegung der verwendeten Bauelemente zu beseitigen. Hierfür werden jedoch neue Einschränkungen gegenüber dem jeweils vorhergehenden Entwicklungsstand in Kauf genommen.

Der Erfindung liegt die Aufgabe zugrunde, eine Ankoppelschaltung der eingangs genannten Art bereitzustellen, bei der die an eine Parallelankopplung gestellten Anforderungen erfüllt und die obengenannten Nachteile der bekannten Ankopplungsarten vermieden sind, wobei die Erzielung einer hohen Selektivität mit großer Flankensteilheit bei gleichzeitig geringem Abstimmwiderstand im Vordergrund steht.

Die Lösung der Aufgabe gelingt erfindungsgemäß mit einer Ankoppelschaltung zur Parallelankopplung eines Rundsteuersenders an ein mehrphasiges elektrisches Netz, die je anzukoppelnder Phase eine Reihenschaltung mit einem netzseitigen Ankoppelkondensator, einem nachfolgenden Transformator, der eine Netz- und eine Sendewicklung aufweist, und einem senderseitigen Abstimmkondensator umfaßt und der Transformator eine zusätzliche Kompensationswicklung aufweist, die mit einem Abstimmkondensator einen Kompensationskreis bildet, wobei die Reihenschaltung als dreikreisiges symmetrisches Filter ausgebildet ist und die drei Wicklungen des Transformators magnetisch lose miteinander gekoppelt sind.

Auf diese Weise ist gegenüber einem einkreisigen Filter eine wesentlich höhere Selektivität gegeben, wodurch eine gute Abstimmbarkeit gegeben ist. Die erfindungsgemäße Ankoppelschaltung verbindet erfolgreich die Vorteile der starren und losen Ankopplung. Verblüffend ist dabei, daß trotz lose gekoppelter Spulen die Leerlauffestigkeit und die geringe Netzlastabhängigkeit der starren Ankopplung erzielt wird. Darüber hinaus werden Netzrückwirkungen sicher beherrscht. Ein derartiger Transformator wird auch Dreiwickeltransformator genannt.

Bevorzugt ist die magnetische Kopplung zwischen der Netzwicklung und der Kompensationswicklung gleich der magnetischen Kopplung zwischen der Sendewicklung und der Kompensationswicklung. Auf diese Weise läßt sich das symmetrische Verhalten des Filters konsequent einhalten. Bei konsequent eingehaltener Symmetrie im Aufbau der Ankoppelschaltung liegt der Resonanzpunkt des Frequenzverlaufs des Filters bei kurzgeschlossenem Senderausgang mindestens in unmittelbarer Nähe der Rundsteuerfrequenz, so daß eine derartige Dreikreisfilterankopplung wie die starre Ankopplung in dieser Betriebsart als Saugkreis für die Rundsteuerfrequenz wirkt und störende Fremdsignale wirksam gedämpft.

Befindet sich die Ankoppelschaltung dagegen im Leerlauf, z.B. durch Abschaltung oder Störung des Senders, so wirkt sie vorteilhaft - abweichend von anderen Varianten von Parallelankopplungen nach dem Stand der Technik - für Rundsteuertonfreqeuenz ohmsch und hochohmig, so daß sie für andere in das selbe Netz einspeisende Rundsteueranlagen keine nennenswerte Belastung bildet.

Der Kompensationskreis kann mit Vorteil einen Dämpfungswiderstand aufweisen. Dadurch kann der Wickelaufwand der Kompensationswicklung gering gehalten werden falls deren Dämpfung nicht ausreichend ist. Der Kompensationskreis kann dabei wahlweise als Serien- oder Parallelschwingkreis ausgebildet sein. Damit ist eine variable Anpassung an die baulichen Gegebenheiten der gesamten Anordnung und deren Verschaltung möglich.

Mit Vorteil kann der Kompensationskreis geerdet sein, wobei bei einer mehrphasigen Anordnung eine gemeinsame Erdung der Kompensationsschwingkreise erfolgt. Dadurch ist ein günstiges Potentialverhalten - auch im Hinblick auf das gewünschte Symmetrieverhalten - gegeben.

Es ist günstig wenn jeweils gleiche Wicklungen der Transformatoren bei einer mehrphasigen Anordnung in Stern oder Dreieck geschaltet sind. Damit ist die Schaltungsanordnung den jeweiligen elektrischen Verhältnissen anpassbar.

Die lose Kopplung der Ankoppelschaltung erfolgt bevorzugt eisenlos. Dadurch ist ein besonders einfacher Aufbau des Transformators gegeben, der sich auch durch ein geringes Gewicht auszeichnet. Darüber hinaus zeichnet sich ein derartiger Aufbau durch eine geringe Geräuschentwicklung aus.

Alternativ kann die lose Kopplung mittels eines magnetisch wirksamen Kerns erfolgen. Auf diese Weise können kleine Baumaße des Transformators erzielt werden. Mit Vorteil können dabei auch alle Wicklungen aller Phasen auf einem gemeinsamen Kern angeordnet werden. Dadurch ist eine weitere Reduzierung der Baugröße möglich.

Die Reihenschaltung der Schaltungsanordnung kann mit einem senderseitigen Kurzschluß versehen werden. Dadurch kann die Ankoppelschaltung in bezug auf das Netz als Saugkreis dienen.

Bevorzugt ist die Kopplung K1 zwischen Sende- und Netzwicklung kleiner als die Kopplung K zwischen Sende- oder Netzwicklung und der Kompensationswicklung. Der Koppelfaktor K ist dabei kleiner als 0,5, vorzugsweise ca. 0,3. Bevorzugt besteht zwischen den beiden Koppelfaktoren ein quadratisches Verhältnis $K1 = K^2$. Dabei ergibt sich für den Koppelfaktor K1 vorzugsweise ein Wert von ca. 0,1, wodurch Netzrückwirkungen auf den Sender immer wirksam unterdrückt sind.

Weiterhin können durch Verwendung von zusätzlichen Kapazitäten oder zusätzlichen Wicklungen oder Anzapfungen am Transformator und/oder durch Zuschaltung von weiteren Induktivitäten Filter höherer Ordnung als 3, insbesondere ungradzahliger Ordnung, gebildet werden. Auf diese Weise läßt sich die Qualität des Filters gegenüber dem Stand der Technik nochmals verbessern.

Die passive Betriebsart der Ankoppelschaltung als Saugkreis für eine Rundsteuerfrequenz kann dadurch realisiert werden, daß senderseitig Kurzschlußbrücken oder ein Kurzschlußschutz vorgesehen sind. Bevorzugt wird jedoch der Kurzschluß durch eine spezielle Ansteuerung der Wechselrichter des Rundsteuersenders erzeugt. Diese Betriebsart läßt sich somit also auf einfache Weise durch ein Programm realisieren.

Ausführungsbeispiele der Erfindung werden nachfolgend anhand der Zeichnung näher erläutert. Es zeigen:

FIG 1      ein Prinzipschaltbild einer Ankoppelschaltung für einen Rundsteuersender,

FIG 2      ein Ausführungsbeispiel der Ankoppelschaltung nach FIG 1,

FIG 3 und 4      Schaltungsbeispiele für die Wicklungen der Ankoppelschaltung,

FIG 5      einen Längsschnitt durch den Transformator der Ankoppelschaltung,

FIG 6      eine räumliche Ansicht der Transformatoren einer dreiphasigen Ausführung und

FIG 7 und 8      Frequenzgänge des von der Ankoppelschaltung gebildeten Dreikreisfilters.

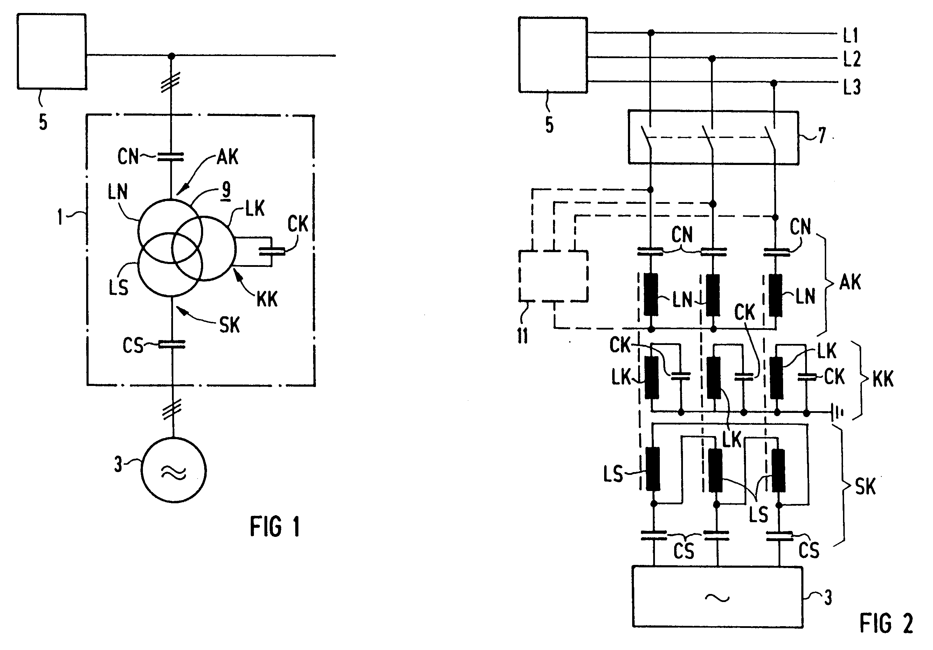

In FIG 1 ist eine Ankoppelschaltung 1 zur Parallelankopplung eines Rundsteuersenders 3 an ein elektrisches Wechselspannungsnetz 5, insbesondere ein Mittel- oder Hochspannungsnetz, gezeigt. Das Wechselspannungsnetz 5, nachfolgend als Netz 5 bezeichnet, ist bevorzugt als mehrphasiges Wechselspannungsnetz, beispielsweise als dreiphasiges Drehstromnetz, ausgebildet und dient zur Enegieversorgung.

Die Ankoppelschaltung 1 ist als symmetrisches Dreikreisfilter ausgebildet. Dazu ist der Rundsteuersender 3 über einen Abstimmkondensator CS an eine Sendewicklung LS eines dreiwickligen Transformators 9 (Dreiwickeltransformator) gelegt. Netzseitig ist der Transformator 9 mit seiner Netzwicklung LN über einen Ankoppelkondensator CN an das Netz 5 angeschlossen. Die dritte Wicklung des Transformators 9, nämlich die Kompensationswicklung LK, bildet zusammen mit einem Kompensationskondensator CK einen Kompensationskreis KK. Auf die Verschaltung des Kompensationskreises KK wird später noch näher eingegangen. Der Abstimmkondensator CS, der Transformator 9 und der Ankoppelkondensator CN bilden eine Reihenschaltung, wobei der Transformator 9 eine Übertragungs- und Potentialtrennungsfunktion ausübt.

Die elektrischen Bauteile der Ankoppelschaltung 1 sind derart ausgelegt, daß die Funktion des dreikreisigen symetrischen Filters (Dreikreisfilter) erzielt ist, bei dem der Ankoppelkondensator CN mit der Netzwicklung LN einen Ankoppelkreis AK, der Kompensationskondensator CK mit der Kompensationswicklung LK den Kompensationskreis KK und der Sendekondensator CS mit der Sendewicklung LS einen Sendekreis SK bilden.

Wesentlich für die Qualität des Filters ist, daß die Wicklungen LK, LN, LS des Transformators 9 magnetisch lose miteinander gekoppelt sind, wobei die Kopplung K zwischen der Netzwicklung LN und der Kompensationswicklung LK gleich der Kopplung zwischen der Sendewicklung LS und der Kompensationwicklung LK ist. Die Kopplung selbst kann dabei nach dem Stand der Technik eisenlos oder mit Kern erfolgen. Bei einer Ausführung mit Kern können gegebenenfalls die Transformatoren T je Phase zu einer Baueinheit mit einem gemeinsamen Kern zusammengefaßt werden.

Gegebenenfalls kann der Kompensationskreis KK einen nicht näher gezeigten Dämpfungswiderstand (Reihen- oder Parallelwiderstand) aufweisen. Die gleiche elektrische Wirkung kann auch durch Veränderung der Güte des Transformators 9 erzielt werden.

FIG 2 zeigt ein Ausführungsbeispiel der Ankoppelschaltung 1 im Detail. Die Ankoppelschaltung 1 ist dabei entsprechend der Phasenanzahl des Netzes 5 dreiphasig ausgeführt. Es sind auch Anordnungen möglich, bei denen die Ankoppelschaltung 1 eine geringere Phasenanzahl als das Netz 5 hat, so daß eine Informationsübertragung nur auf einem Teil der Phasen erfolgt.

Die jeweils gleichen Wicklungen eines Kreises AK, KK, SK sind je nach den elektrischen Anforderungen in Stern oder in Dreieck miteinander verschaltet. Vorliegend sind die Netzwicklungen LN in Stern und die Sendewicklungen LS in Dreieck verschaltet. Die Kompensationskreise KK sind als Serienschwingkreis ausgebildet und gemeinsam geerdet.

Die Ankoppelschaltung 1 ist in diesem Ausführungsbeispiel über einen Leistungsschalter 7 mit dem Netz 5 verbindbar. Die Ankoppelschaltung 1 kann zusätzlich - wie aus der Praxis bekannt - mit einer Schutzeinrichtung, insbesondere mit einer Asymmetrieüberwachung 11 (strichliert dargestellt), ausgerüstet sein. Diese kann beispielsweise aus drei Spannungsmeßwandlern und einer Erfassungseinrichtung für die Asymmetrie bestehen (nicht näher gezeigt). Hierdurch werden bereits geringfügige Kapazitätsänderungen der Ankoppelkondensatoren CN erfaßt, was zu einer Auslösung des Leistungsschalters 7 führt. Die Meßwandler dienen gleichzeitig gemäß VDE 0 101 als Entladeeinrichtung der Ankoppelkondensatoren CN. Sollte keine Schutzeinrichtung für die Kondensatoren vorgesehen sein, so können die Kondensatoren - wie nach dem Stand der Technik üblich - mit internen Entladewiderständen ausgerüstet sein.

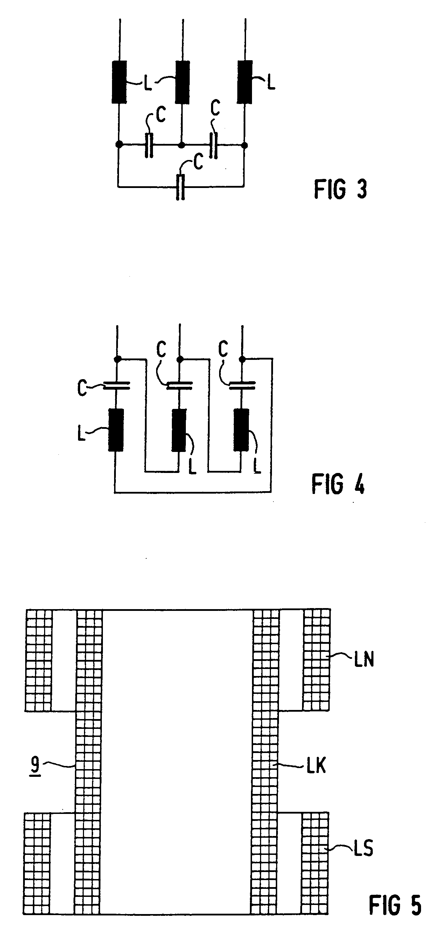

Die Figuren 3 und 4 zeigen alternative Verschaltungsarten im Prinzip, die rein beispielhaft für alle Kreise oder Wicklungen der Ankoppelschaltung 1 beziehungsweise des Transformators 9 zur Anwendung kommen können. Die Verschaltungsarten können vom Fachmann sinngemäß bei einzelnen Kreisen angewendet werden. Die Wicklungen L und Kondensatoren C gelten symbolisch für die jeweiligen Bauteile der jeweiligen Kreise.

FIG 5 zeigt einen Längsschnitt durch den Transformator 9 in einer eisenlosen Ausführung. An jeweils einem Ende der zylinderförmigen Kompensationswicklung LK sind koaxial die Netzwicklung LN bzw. die Sendewicklung LS angeordnet. Der Aufbau ist symetrisch. Die Kopplung K1 zwischen Sende- und Netzwicklung LS bzw. LN ist kleiner als die Kopplung K zwischen Netz- oder Sendewicklung LN bzw. LS und Kompensationswicklung LK. Bevorzugt ist das Verhältnis etwa quadratisch. So ergibt sich bei einem Koppelfaktor von K= 0,3 ein Koppelfaktor K1 zu 0,1. Der Koppelfaktor K ist bevorzugt kleiner als 0,5.

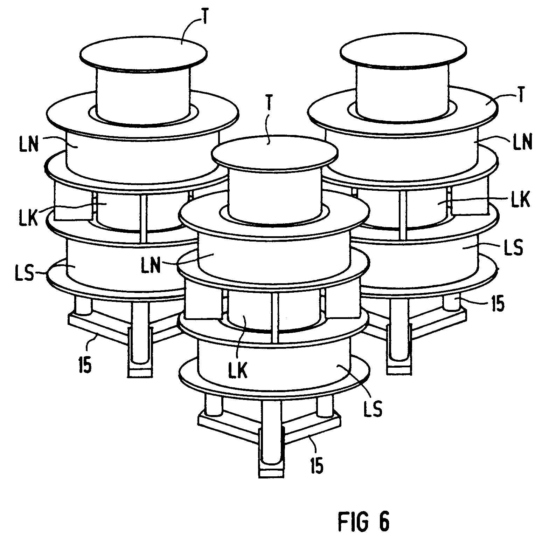

FIG 6 zeigt eine mögliche Anordnung und Ausgestaltung dreier Transformatoren 9 einer dreiphasigen Ausführung in einer Außenansicht. Die Wicklungen LN, LK, LS der jeweiligen Transformatoren sind dabei jeweils auf Gestellen 15 angeordnet. Die Transformatoren 9 sind bevorzugt in gleichem Abstand zueinander angeordnet.

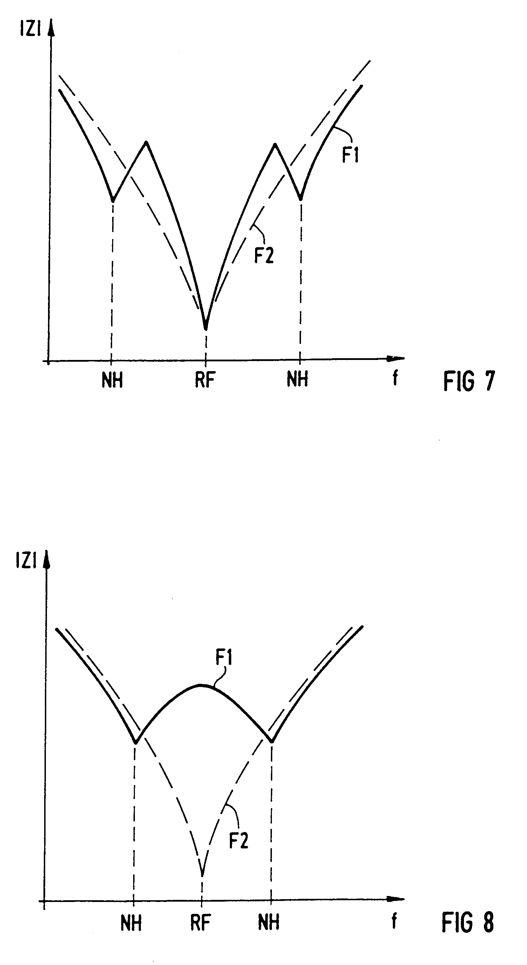

In den Figuren 7 und 8 ist jeweils der Verlauf des Betrags der Impedanz |Z| je Phase der Ankoppelschaltung in Abhängigkeit von der Frequenz f dargestellt. Diese Verläufe sind nachfolgend als "Frequenzgang" der Ankopplung bezeichnet. Die Frequenzgänge sind bezüglich der Rundsteuerfrequenz RF symmetrisch. Die Ankoppelschaltung 1 besitzt folgendes Betriebsverhalten:
Für Rundsteuerfrequenz niederohmig

- zwischen Sender und Netz bei Sendebetrieb und
- in Sendepausen,

für Rundsteuerfrequenz hochohmig

- für den Sender im Leerlauf ohne Netz und
- netzseitig bei ausgeschaltetem Sender und

für Netzfrequenz und Netzfrequenzharmonische generell hochohmig.

FIG 7 stellt den Frequenzgang F1 im Sendebetrieb oder den Frequenzgang im passiven Betrieb vom Netz her gesehen senderseitig kurzgeschlossen dar. Der Frequenzgang F1 weist eine deutlich höhere Flankensteilheit gegenüber dem Frequenzgang F2 eines einkreisigen Filters nach dem Stand der Technik auf.

FIG 8 zeigt den Frequenzgang F1 im passiven Betrieb, senderseitig leerlaufend. Der Resonanzpunkt liegt nach wie vor bei der Rundsteuerfrequenz RF, ist jedoch jetzt hochohmig. In dieser Betriebssituation ist auch für die Netzharmonischen NH ein höherer Impedanzwert gegenüber dem eines vergleichbaren einkreisigen Filters ( Frequenzgang F2). Das einkreisige Filter weist gegenüber der Darstellung in FIG 7 eine unverändertes Verhalten auf, das aus Sicht des Netzes 5 einem Kurzschluß für andere Rundsteuersignale dieser Frequenz entspricht.

Die Nebenresonanzstellen NH lassen sich durch Wahl des Koppelfaktors K verschieben und damit auf Abstand zu der jeweils benachbarten Netzharmonischen bringen. K sollte dabei kleiner als 0,5, vorzugsweise ca. 0,3, sein.

**Patentansprüche**

1. Ankoppelschaltung (1) zur Parallelankopplung eines Rundsteuersenders (3) an ein mehrphasiges elektrisches Netz (5),

   - die je anzukoppelnder Phase (L1, L2, L3) eine Reihenschaltung mit einem netzseitigen Ankoppelkondensator (CN), einem nachfolgenden Transformator (T), der eine Netz- und eine Sendewicklung (LN bzw. LS) aufweist, und einem senderseitigen Abstimmkondensator (CS) umfasst

   **dadurch gekennzeichnet, daß**

   - der Transformator (T) eine zusätzliche Kompensationswicklung (LK) aufweist, die mit einem Kompensationskondensator (CK) einen Kompensationskreis (KK) bildet,
   - wobei die Reihenschaltung als dreikreisiges symmetrisches Filter ausgebildet ist und die drei Wicklungen (LN, LS, LK) des Transformators (T) magnetisch lose miteinander gekoppelt sind.

2. Ankoppelschaltung nach Anspruch 1, **dadurch gekennzeichnet,** daß die magnetische Kopplung K zwischen der Netzwicklung (LN) und der Kompensationswicklung (LK) gleich der magnetischen Kopplung zwischen der Sendewicklung (LS) und der Kompensationswicklung (LK) ist.

3. Ankoppelschaltung nach Anspruch 1 oder 2, **dadurch gekennzeichnet,** daß der Kompensationskreis (KK) einen Dämpfungswiderstand umfaßt.

4. Ankoppelschaltung nach Anspruch 1,2 oder 3, **dadurch gekennzeichnet,** daß der Kompensationskreis (KK) als Reihen- oder Parallelschwingkreis ausgebildet ist.

5. Ankoppelschaltung nach einem der Ansprüche 1 bis 4, **dadurch gekennzeichnet,** daß bei einem mehrphasigen Netz (5) je Phase (L1,L2,L3) eine Reihenschaltung vorgesehen ist und jeweils gleiche Wicklungen (LN,LK,LS) des Transformators (T) in Stern oder in Dreieck geschaltet sind.

6. Ankoppelschaltung nach Anspruch 5, **dadurch gekennzeichnet,** daß die Kompensationswicklungen (LK) gemeinsam geerdet sind.

7. Ankoppelschaltung nach einem der Ansprüche 1 bis 6, **dadurch gekennzeichnet,** daß die lose Kopplung eisenlos erfolgt.

8. Ankoppelschaltung nach einem der Ansprüche 1 bis 7, **dadurch gekennzeichnet,** daß die Kopplung mittels eines magnetisch wirksamen Kerns erfolgt.

9. Ankoppelschaltung nach einem der Ansprüche 1 bis 8, **dadurch gekennzeichnet,** daß die Reihenschaltung einen senderseitigen Kurzschluß aufweist.

10. Ankoppelschaltung nach einem der Ansprüche 1 bis 9, **dadurch gekennzeichnet,** daß die Kopplung K kleiner als 0,5 ist.

11. Ankoppelschaltung nach Anspruch 10, **dadurch gekennzeichnet,** daß die Kopplung (K) etwa 0,3 ist.

12. Ankoppelschaltung nach einem der Ansprüche 10 oder 11, **dadurch gekennzeichnet,** daß die Kopplung (K1) zwischen Netz- und Sendewicklung (LN bzw. LS) gleich dem Quadrat der Kopplung (K) zwischen Netz- oder Sendewicklung (LN bzw. LS) und Kompensationswicklung (LK) ist.

FIG 2

FIG 1

FIG 3

FIG 4

FIG 5

FIG 6

FIG 7

FIG 8

**Europäisches Patentamt**

# EUROPÄISCHER RECHERCHENBERICHT

Nummer der Anmeldung

EP 95 11 5791

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | DE-A-28 30 151 (BROWN BOVERI & CIE AG) * Seite 5, Zeile 7 - Seite 6, Zeile 8; Abbildung * --- | 1 | H02J13/00 H04B3/56 |
| A,D | DE-A-24 59 978 (LGZ LANDIS & GYR ZUG AG) * Seite 3, Zeile 22 - Seite 4, Zeile 23; Abbildungen 1,2 * --- | 1 | |
| A | CH-A-643 091 (LGZ LANDIS & GYR ZUG AG) * Seite 3, linke Spalte, Zeile 6 - rechte Spalte, Zeile 56; Abbildungen 2,7,8 * --- | 1 | |
| A,D | DE-A-24 61 564 (LGZ LANDIS & GYR ZUG AG) * Seite 3, Zeile 12 - Seite 4, Zeile 7; Abbildungen 1-2B * --- | 1 | |
| A,D | DE-A-28 25 249 (SIEMENS AG) * Seite 13, Zeile 15 - Seite 18, Zeile 20 * * Seite 20, Zeile 15 - Seite 21, Zeile 1; Abbildungen 1-4,8 * --- | 1 | RECHERCHIERTE SACHGEBIETE (Int.Cl.6) |
| A | US-A-4 646 319 (J. ENGEL ET AL.) * Spalte 9, Zeile 11 - Spalte 12, Zeile 54; Abbildungen 3-12 * ----- | 1 | H02J H04B |

Der vorliegende Recherchenbericht wurde für alle Patentansprüche erstellt

| Recherchenort | Abschlußdatum der Recherche | Prüfer |
|---|---|---|
| DEN HAAG | 25.Januar 1996 | Helot, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...........................................................................................
& : Mitglied der gleichen Patentfamilie, übereinstimmendes Dokument

EPO FORM 1503 03.82 (P04C03)